# FASCICULE DE BREVET EUROPEEN

(11) **EP 1 678 724 B1**
(45) Date de publication et mention de la délivrance du brevet: **26.09.2012**
(21) Numéro de dépôt: 04805298.9
(22) Date de dépôt: 25.10.2004
(51) Int. Cl.: C04B 35/51, C04B 35/632, G21C 21/02, G21C 3/62

(54) **PROCEDE DE FABRICATION DE PASTILLES DE COMBUSTIBLE NUCLEAIRE**
VERFAHREN ZUR HERSTELLUNG VON KERNBRENNSTOFF-PELLETS
METHOD FOR THE PRODUCTION OF NUCLEAR FUEL PELLETS

(30) Priorité: 29.10.2003 FR 0312687
(43) Date de publication de la demande: 12.07.2006
(73) Titulaire: Société Franco-Belge de Fabrication de Combustibles - FBFC, 92400 Courbevoie (FR)
(72) Inventeur: FEUGIER, André, F-26300 Chatuzange Le Goubet (FR); DE TOLLENAERE, Luc, B-2400 Mol (BE); PERES, Véronique, F-26300 Hostun (FR); GYSEN, Marijn, B-3900 Overpelt (BE)
(74) Mandataire: Domenego, Bertrand
(86) Numéro de dépôt international: PCT/FR2004/002739
(87) Numéro de publication internationale: WO 2005/045848

(56) Documents cités:
- EP-A- 0 249 549
- FR-A- 2 403 628
- FR-A- 2 807 199
- GB-A- 2 023 111
- US-A- 4 522 769

## Description

L'invention concerne un procédé de fabrication de pastilles de combustible nucléaire renfermant principalement du dioxyde d'uranium UO₂ et utilisées pour la fabrication d'éléments de combustible pour un réacteur nucléaire.

Les éléments de combustible pour les réacteurs nucléaires et en particulier pour les réacteurs nucléaires refroidis par de l'eau sous pression comportent généralement des tubes de grande longueur fermés à leurs extrémités dans lesquels sont empilées des pastilles de combustible dont le diamètre est généralement un peu inférieur à 10 mm et la longueur comprise entre 10 mm et 20 mm.

Les pastilles de combustible sont obtenues par frittage, généralement vers 1700°C, d'une matière contenant principalement du dioxyde d'uranium UO₂ qui est obtenue à partir d'une poudre issue d'un procédé de conversion d'hexafluorure d'uranium UF₆.

On connaît différents procédés pour obtenir par conversion de l'hexafluorure d'uranium UF₆, des oxydes d'uranium et en particulier le dioxyde d'uranium UO₂. On connaît en particulier un procédé de conversion dit "procédé de conversion voie sèche" de l'hexafluorure d'uranium gazeux qui est un procédé de pyrohydrolyse de l'hexafluorure d'uranium par de la vapeur d'eau. Ce procédé permet d'obtenir des oxydes dont la composition moyenne peut s'exprimer par la formule UO₂₊ₓ. Ces oxydes comportent principalement le dioxyde UO₂ et d'autres oxydes en proportion variable tels que U₃O₈ ou U₃O₇, suivant la conduite du procédé de conversion de l'UF₆, la poudre obtenue par les procédés voie sèche est une poudre peu dense (densité généralement inférieure à 1g/cm³) constituée par des cristallites de très petites dimensions (0,1 µm à 0,4 µm) plus ou moins agglomérées entre elles. Une telle poudre présente une coulabilité médiocre (mesurée par les essais habituels de coulabilité).

Dans le cadre de la fabrication des pastilles de combustible, il est nécessaire de réaliser, préalablement au frittage, la fabrication de pastilles crues, par compression à froid d'une matière granulaire. La fabrication des pastilles crues par compression nécessite d'introduire la matière granulaire dans des matrices cylindriques étroites et profondes, à des cadences élevées dans le cas d'une fabrication industrielle, de sorte que la matière granulaire pour la fabrication des pastilles crues qui seront soumises ensuite au frittage doit présenter une bonne coulabilité et des propriétés permettant d'obtenir des pastilles crues suffisamment résistantes pour subir des manipulations avant le frittage.

On connaît divers procédés (par exemple ajout de poudre d'U₃O₈ de qualité bien définie tel que décrit par exemple dans le brevet français 2 599 883 et le brevet européen 0249 549) pour améliorer les caractéristiques mécaniques des pastilles crues. Ces procédés sont généralement fondés sur l'addition en quantité réglée d'un oxyde tel qu'U₃O₈ ou U₃O₇ à l'UO₂. Généralement, on doit également incorporer à la matière granulaire pour la fabrication des pastilles crues, des additifs tels que des lubrifiants et des matières porogènes qui permettent de faciliter la mise en forme des pastilles crues et de régler la porosité et la densité des pastilles de combustible frittées.

Les poudres d'oxyde d'uranium obtenues par les procédés de conversion de l'hexafluorure d'uranium et en particulier les procédés voie sèche ne peuvent être utilisées sans transformation pour la fabrication des pastilles crues. Un grand nombre d'opérations sont généralement nécessaires pour obtenir une matière granulaire de bonne coulabilité, ayant une densité sensiblement supérieure à la densité de la poudre et présentant les caractéristiques voulues pour l'obtention de pastilles crues de bonne qualité. Il est nécessaire en particulier d'augmenter et d'homogénéiser la granulométrie des poudres, pour obtenir des particules d'une dimension suffisante et d'une forme améliorant la coulabilité et la compressibilité.

De manière classique, on réalise, dans un premier temps, dans l'atelier de conversion, un tamisage des poudres obtenues directement par le procédé de conversion voie sèche et / ou le broyage de particules dures (par exemple fluorées) retenues lors du tamisage, l'homogénéisation des poudres, leur chargement et leur stockage en vue de leur utilisation dans l'atelier de pastillage qui peut être ou non situé à proximité de l'atelier de conversion.

On réalise ensuite le chargement des poudres dans le mélangeur de l'atelier de pastillage, avec l'incorporation d'additifs, en particulier de porogènes, puis le mélange et l'homogénéisation des poudres et additifs, et le précompactage du mélange des poudres dans une presse pour obtenir des éléments pré-compactés. Les éléments pré-compactés sont ensuite soumis à une opération de granulation dans un broyeur ou un granulateur, puis à une opération de sphéroïdisation pour obtenir une forme régulière des particules proche d'une forme sphérique, dans un récipient d'agitation. On ajoute ensuite un lubrifiant qui est mélangé aux particules par agitation avant de réaliser la compression pour l'obtention de pastilles crues qui seront ensuite frittées.

Le passage de la poudre directement obtenue par le procédé de conversion d'UF₆ à la matière particulaire qui peut être comprimée sous la forme de pastilles crues nécessite donc de nombreuses opérations qui doivent toutes être réalisées dans des conditions satisfaisantes pour permettre l'obtention de pastilles crues et de pastilles frittées de bonne qualité. L'ensemble des opérations nécessite de nombreux dispositifs différents tels que des mélangeurs, des presses (ou compacteurs à rouleaux) et des broyeurs granulateurs sur lesquels les causes de panne sont multiples. Le risque principal rencontré est la rupture d'un tamis à la sortie d'un granulateur qui est nécessaire pour assurer une granulométrie homogène et satisfaisante de la matière particulaire utilisée pour la fabrication des pastilles crues. Dans le cas d'une rupture de tamis, les produits obtenus doivent être retraités afin d'éliminer les résidus métalliques provenant de la destruction du tamis et de garantir une granulométrie convenable pour l'opération de fabrication des pastilles.

On connaît également des procédés de fabrication de poudre d'oxyde d'uranium par voie humide pouvant mettre en oeuvre un traitement par atomisation d'une suspension. Les poudres obtenues par les procédés "voie humide" ont des caractéristiques de densité et de coulabilité supérieures aux poudres obtenues par les procédés voie sèche et des caractéristiques de granulométrie que l'on ne peut obtenir actuellement, directement par les procédés voie sèche connus. Toutefois, ces poudres doivent encore subir des traitements de conditionnement avant d'être mises sous forme de pastilles crues soumises ensuite au frittage. En outre, on souhaite de plus en plus remplacer les procédés voie humide par les procédés voie sèche pour des raisons liées à la sûreté et à l'environnement, et il devient nécessaire d'assurer l'approvisionnement des usines utilisant traditionnellement des produits obtenus par voie humide avec des poudres d'UO₂ obtenues par voie sèche.

En particulier, dans le cas de la fabrication de combustible mixte MOX constitué d'un mélange de dioxyde d'uranium UO₂ et de dioxyde de plutonium PuO₂, il devient nécessaire d'assurer l'approvisionnement des unités de fabrication en poudres d'UO₂ obtenues par voie sèche.

Les procédés de fabrication de pastilles d'oxyde mixte d'uranium et de plutonium utilisés actuellement nécessitent l'utilisation de poudres d'UO₂ ayant une bonne coulabilité et composées de granulés préférentiellement de forme régulière, une densité élevée, proche de 2g/cm³, une granulométrie réglée à une valeur inférieure à 250 µm pour obtenir un bon mélange de l'oxyde d'uranium et de l'oxyde de plutonium et des caractéristiques permettant d'obtenir des pastilles crues ayant une bonne résistance mécanique.

Afin de conférer aux poudres voie sèche des caractéristiques satisfaisantes de densité, de coulabilité et de granulométrie, on a proposé d'utiliser un procédé d'atomisation séchage des poudres d'oxyde d'uranium obtenues par voie sèche qui peut être mis en oeuvre industriellement sur une poudre d'oxyde d'uranium contenant une teneur limitée en isotope U₂₃₅.

On a proposé également, pour améliorer la coulabilité, la densité et la granulométrie des poudres voie sèche, de fabriquer des granulés par précompactage puis de réaliser une granulation. Cependant, les granulés obtenus ont une taille trop élevée (jusqu'à 1200 µm) pour permettre un mélange intime avec la poudre d'oxyde de plutonium. Il est donc nécessaire d'effectuer des opérations ultérieures de granulation ou de broyage avec un tamisage des granulés. Les techniques de broyage classiques altèrent la coulabilité et font baisser la densité des produits. En outre, les opérations sont complexes et présentent un certain danger dans la mesure où les fils des tamis utilisés peuvent subir des ruptures, de sorte que des déchets peuvent se retrouver mélangés aux granulés, ce qui peut causer des dégâts aux installations de pastillage utilisant les granulés. De manière plus générale, en dehors de l'addition d'oxyde de plutonium PuO₂ dans le cadre de la fabrication du combustible MOX, on peut être amené à incorporer de nombreux additifs aux poudres d'UO₂ obtenues par voie sèche. De tels additifs peuvent être par exemple des matériaux absorbants et modérateurs ou des matériaux combustibles fertiles tels que ThO₂ ou des oxydes de terres rares tels que Gd₂O₃, Er₂O₃. Pour réaliser l'incorporation et le mélange de tels additifs à la poudre d'UO₂ obtenue par voie sèche, il est nécessaire de réaliser des traitements préalables de conditionnement de la poudre d'UO₂, par exemple par des homogénéisations plus ou moins poussées, par atomisation séchage suivi éventuellement d'opérations de pré-compactage et granulation, ces opérations étant elles-même suivies d'une ou plusieurs étapes de broyage et/ou de tamisage. Ces procédés sont donc complexes et nécessitent de nombreuses étapes pour le conditionnement de la poudre d'UO₂ et pour son mélange aux additifs.

Comme indiqué plus haut, dans le cas de la fabrication des combustibles principalement à base d'oxyde d'uranium UO₂, on réalise généralement un mélange de poudre d'UO₂ et d'U₃O₈ (ou U₃O₇) dans une proportion de 80/20 ou de préférence 90/10. Les oxydes U₃O₈ utilisés peuvent être obtenus directement par le procédé voie sèche en réglant les conditions dans lesquelles on réalise la pyrohydrolyse de l'UF₆ par la vapeur d'eau. L'U₃O₈ ou l'U₃O₇ peuvent être également obtenus par oxydation d'une poudre d'UO₂ à basse température. Les oxydes U₃Oₐ ou U₃O₇ peuvent être ajoutés à la poudre de départ ou dans les mélangeurs de l'atelier de pastillage avant l'étape de précompactage.

D'autres additifs utilisés pour modifier la microstructure des pastilles combustibles tels que l'oxyde de chrome, l'alumine, la silice, les oxydes de vanadium et de niobium ou d'autres composés peuvent être incorporés et mélangés au dioxyde d'uranium obtenu par voie sèche, à différentes étapes du procédé qui nécessitent dans tous les cas la préparation d'une matière particulaire de caractéristiques voulues pour la fabrication des pastilles crues. Ces opérations d'incorporation et de mélange peuvent compliquer encore la préparation de la matière particulaire.

Il est généralement nécessaire également d'utiliser des lubrifiants dans certaines étapes du procédé, par exemple avant le pré-compactage et avant la compression de la matière particulaire sous forme de pastilles crues.

De manière générale, les opérations qui doivent être mises en oeuvre préalablement à la fabrication des pastilles crues sont nombreuses et complexes, en particulier dans le cas où l'on utilise de l'oxyde d'uranium UO₂ peu ou pas coulable et fin obtenu par un procédé voie sèche, de tels procédés devant se substituer au procédé voie humide.

Le but de l'invention est donc de proposer un procédé de fabrication de pastilles de combustible nucléaire par frittage d'une matière contenant du dioxyde d'uranium UO₂ obtenue à partir d'une poudre issue d'un procédé de conversion d'hexafluorure d'uranium UF₆ qui permette de simplifier les opérations nécessaires pour obtenir une matière granulaire contenant le dioxyde d'uranium UO₂ ayant des propriétés adéquates pour la fabrication de pastilles crues soumises ensuite au frittage.

Dans ce but, on introduit dans une cuve renfermant des corps mobiles de compression et de mélange, la poudre obtenue directement par un procédé de conversion d'hexafluorure UF₆ et on réalise une agitation de la cuve de telle sorte que la poudre se déplace dans le volume de la cuve, suivant trois axes non coplanaires, de manière à être comprimée entre les corps mobiles et entre les corps mobiles et les parois de la cuve jusqu'à former une matière particulaire d'une densité à l'état non tassé d'au moins 1,7 g/cm³, et on utilise la matière particulaire obtenue par agitation dans la cuve pour la mise en forme par compactage de pastilles de combustible crues qui sont soumises au frittage.

Le procédé suivant l'invention peut comporter de manière isolée ou en combinaison les caractéristiques suivantes :
- on soumet la cuve à un mouvement vibratoire tridimensionnel ;
- la poudre introduite dans la cuve est obtenue par un procédé de conversion voie sèche et présente une densité inférieure à 1 g/cm³ et la densité à l'état non tassé de la matière particulaire obtenue par agitation dans la cuve est d'environ 2 g/cm³ ;
- la poudre obtenue directement par un procédé de conversion d'hexafluorure UF₆ présente une densité inférieure à 1 g/cm³ et une coulabilité nulle définie par un essai standard de passage à travers un orifice de 15 mm, et la matière particulaire obtenue par agitation dans la cuve présente une coulabilité supérieure à 10 g/s après quelques minutes d'agitation dans la cuve ;

- on réalise l'agitation de la cuve contenant les corps mobiles et la poudre obtenue directement par un procédé de conversion d'hexafluorure UF₆, pendant une durée de 1 à 600 minutes ;
- les corps mobiles de compression et de mélange dans la cuve sont des corps libres ayant une forme géométrique quelconque simple et une surface de rugosité faible ;
- les corps mobiles sont de forme cylindrique ;
- les corps mobiles ont la forme de billes sensiblement sphériques ;
- les corps mobiles sont en l'un des matériaux suivants : alumine Al₂O₃ frittée, oxyde d'uranium fritté, oxyde de zirconium fritté pur ou dopé, carbure de Tungstène, aciers, Uranium métal ou alliage Uranium/Titane ;
- on introduit dans la cuve, avant de réaliser l'agitation de la cuve, avec la poudre de dioxyde d'Uranium UO₂ obtenue directement par un procédé de conversion d'hexafluorure UF₆, au moins un additif constitué par au moins un porogène dans une proportion au moins égale à 0,01% ;
- on introduit dans la cuve, avec la poudre de dioxyde d'uranium UO₂ obtenue directement par un procédé de conversion d'hexafluorure UF₆, au moins un additif ;
- l'additif est introduit dans la cuve avant de réaliser le traitement par agitation de la cuve ;
- l'additif est introduit dans la cuve au cours du traitement par agitation de la cuve ;
- l'additif est constitué par l'une au moins des substances suivantes : oxyde d'uranium U₃O₈, oxyde d'uranium U₃O₇, oxyde de plutonium P_{U}O₂, oxyde de thorium ThO₂, oxyde de gadolinium Gd₂O₃, substance porogène, lubrifiant, agents dopants du frittage ;
- pour la fabrication de pastilles de combustible mixte oxyde d'uranium - oxyde de plutonium (MOX), la cuve est placée dans une enceinte de confinement telle qu'une boîte à gant et on réalise l'introduction de poudres d'oxyde d'uranium, d'oxyde de Plutonium et d'additifs, dans la cuve et l'agitation de la cuve, de manière commandée depuis l'extérieur de l'enceinte de confinement.
- préalablement à la mise en forme des pastilles crues par compression de la matière particulaire obtenue par agitation dans la cuve, on ajoute une matière lubrifiante à la matière particulaire et on réalise un mélange de la matière particulaire et de la matière lubrifiante pour répartir la matière lubrifiante sur les particules de la matière particulaire.
- on mélange la matière particulaire renfermant principalement de l'oxyde d'Uranium UO₂ obtenue par agitation de la poudre de conversion, en présence de corps mobiles, avec de la poudre d'oxyde de plutonium PuO₂, avant la mise en forme des pastilles crues, pour la fabrication de combustible MOX.

Afin de bien faire comprendre l'invention, on va décrire plusieurs exemples de réalisation du procédé de l'invention ainsi que des moyens particuliers utilisés pour sa mise en oeuvre.

L'un des aspects fondamentaux du procédé suivant l'invention est qu'il permet de passer en une seule opération de compression et de mélange d'un produit de départ obtenu directement par un procédé de conversion d'UF₆ à un matériau particulaire qui peut être utilisé pour la fabrication de pastilles crues par compression dans des presses utilisées habituellement pour la fabrication des pastilles crues.

Le produit de départ est une poudre d'oxyde d'uranium renfermant principalement UO₂ obtenue directement par un procédé de conversion d'hexafluorure d'uranium UF₆ et plus particulièrement par un procédé de conversion voie sèche. Une telle poudre obtenue à la sortie de l'installation de conversion présente une composition qui peut être définie de manière générale sous la forme UO_{2,+x}, cette poudre renfermant principalement de l'UO₂ et des quantités moindres qui peuvent être réglées d'autres oxydes tels qu'U₃O₈ et U₃O₇. La poudre obtenue en sortie de l'installation de conversion est constituée de cristallites ayant une dimension de 0,1 µm à 0,4 µm qui sont partiellement agglomérées entre elles, sous forme d'agrégats plus ou moins fragiles de tailles moyennes généralement comprise entre 0.5 et 20 micromètres. La densité de cette poudre est toujours inférieure à 2g/cm³ ou même à 1,5 g/cm³ et plus couramment inférieure à 1 g/cm³ et de l'ordre de 0,7 à 0,9 g/cm³. Une telle poudre présente une coulabilité définie par un essai standard de passage à travers un orifice de 15 mm d'un récipient conique et représentée par une valeur de débit en g/seconde ayant une valeur nulle, la poudre ne pouvant s'écouler à travers l'orifice dans le cadre de l'essai standard.

Toutes les densités indiquées dans le présent texte (sauf indication contraire) sont des densités apparentes mesurées en utilisant un essai normalisé.

Une telle poudre de départ à faible densité, faible granulométrie et coulabilité nulle ne peut être utilisée dans un procédé de fabrication de pastilles crues, sans transformation.

Le produit de départ, lorsqu'il est constitué par exemple par une poudre d'oxyde UO₂ obtenue par voie humide est également impropre à la fabrication de pastilles crues sans transformation intermédiaire.

Le procédé de l'invention qui ne comporte qu'une seule étape pour passer de la poudre de départ qui a été définie plus haut à une matière particulaire ayant une densité à l'état non tassé supérieure à 1,7 g/m³ et une bonne coulabilité est mis en oeuvre dans une cuve dans laquelle on introduit la poudre de départ et éventuellement des additifs, comme il sera expliqué plus loin. La cuve utilisée présente généralement une paroi en acier revêtue intérieurement par une couche de matière organique synthétique, par exemple du polyuréthane, pour limiter ou supprimer les risques d'abrasion de la paroi de la cuve et la contamination des produits introduits dans la cuve. La paroi de la cuve présente généralement une forme de révolution autour d'un axe, par exemple une forme cylindrique ou une forme toroïdale. La cuve contient des corps mobiles de compression et de mélange qui sont de préférence libres à l'intérieur de la cuve et / ou qui peuvent être également reliés à la cuve mais de manière à pouvoir se déplacer.

La cuve est montée mobile sur un support et comporte des moyens de déplacement permettant de réaliser une agitation telle que les matériaux contenus dans la cuve, par exemple la poudre et les corps mobiles de compression et de mélange, se déplacent dans tout le volume de la cuve suivant un déplacement tridimensionnel, c'est-à-dire dont les vecteurs de déplacement présentent des composantes suivant trois axes non coplanaires de l'espace. Les déplacements des matières à l'intérieur de la cuve peuvent être provoqués uniquement par l'agitation de la cuve ou à la fois par le mouvement de la cuve et par des éléments releveurs placés à l'intérieur de la cuve.

Les corps mobiles disposés à l'intérieur de la cuve sont généralement réalisés en un métal ou alliage dur ou en une matière céramique. De préférence, ces corps mobiles sont en alumine ou en oxyde d'uranium fritté, de manière à obtenir la dureté voulue pour éviter une contamination de la poudre d'oxyde d'uranium par des produits susceptibles de détériorer les propriétés de la poudre ou des pastilles de combustible.

Les corps mobiles de compression et de mélange disposés dans la cuve peuvent présenter des formes très diverses, telles que des formes cylindriques, sphériques ou cubiques ; ces corps mobiles peuvent être constitués par exemple par des boulets, des anneaux, des billes, des cubes, des cylindres ayant des extrémités planes ou hémisphériques ou des galets ou des corps de toute autre forme.

La capacité de la cuve peut être largement variable, sans altérer les conditions de mise en oeuvre du procédé. La capacité de la cuve peut aller de quelques kilos à plusieurs centaines de kilos et même jusqu'à plusieurs tonnes, la capacité de la cuve correspondant à la masse maximale d'éléments qu'elle peut contenir (poudre et corps mobiles).

Compte tenu de la capacité de la cuve, certains paramètres sont à régler pour obtenir un rendement optimal de la transformation de la poudre d'oxyde d'uranium en matière particulaire pour la fabrication de pastilles crues. Ces paramètres sont en particulier le taux de remplissage en corps mobiles qui se définit comme le rapport entre le volume total des corps mobiles et le volume utile de la cuve, le taux de remplissage en poudre qui se définit comme le rapport entre le volume total de la poudre introduite dans la cuve et le volume utile de la cuve ainsi que le coefficient de remplissage poudre/corps mobiles qui se définit comme le rapport entre le volume total de la poudre introduite dans la cuve et le volume de vide entre les corps mobiles, lorsque la cuve est au repos.

De manière générale, on réalise le remplissage de la cuve, de manière à recouvrir l'ensemble des corps mobiles et à remplir les espaces entre les corps mobiles. D'autres conditions de remplissage sont également possibles.

De préférence, la cuve renfermant les corps mobiles est montée sur un support fixe de manière à pouvoir être mise en vibration et comporte des moyens moteurs de mise en vibration généralement constitués par un moteur à balourd.

Dans un mode de réalisation particulier qui a donné satisfaction, pour la fabrication d'une matière particulaire à partir de poudre d'UO₂ obtenue par conversion voie sèche, on a utilisé un broyeur commercialisé sous la référence DM1 par la société SWECO.

La cuve du broyeur comporte une paroi de forme toroïdale montée avec son axe de révolution vertical sur un support fixe, par l'intermédiaire de ressorts d'appui hélicoïdaux à axe vertical. Un moteur de mise en vibration est monté solidaire de la paroi de la cuve, avec son axe suivant l'axe vertical de la cuve. Le moteur est associé à des balourds, si bien que, lorsqu'il est mis en rotation, il entraîne la cuve dans un mouvement vibratoire oscillant tridimensionnel, l'axe de la cuve subissant à la fois un mouvement tournant et oscillant. La cuve renferme des corps mobiles libres qui peuvent être par exemple de forme sphérique ou cylindrique ou plus complexes sur lesquels on déverse la poudre à traiter, avant de mettre en fonctionnement le moteur d'agitation de la cuve. Les corps mobiles libres et la poudre se déplacent sous l'effet des mouvements et des vibrations de la cuve, suivant des trajectoires à trois dimensions remplissant une partie substantielle du volume intérieur de la cuve. Pendant les déplacements des corps mobiles libres et de la poudre sous l'effet des déplacements et des vibrations de la cuve, la poudre est comprimée entre les corps mobiles et entre les corps mobiles et les parois de la cuve.

De manière inattendue, lorsqu'on introduit dans le broyeur DM1 SWECO une poudre d'oxyde d'uranium provenant d'un procédé de conversion voie sèche d'UF₆, on observe une augmentation continue de la granulométrie de la poudre au cours du temps. Le dispositif SWECO est désigné par son constructeur comme un broyeur vibrant permettant de réduire la granulométrie de matière particulaire ou de poudre jusqu'à des dimensions sub-microniques allant jusqu'à 0,5 µm. Le traitement dans ce dispositif connu de poudre de conversion voie sèche de densité voisine de 0.8g /cm3,comportant des cristallites de 0,1 µm à 0,4 µm plus ou moins liées sous forme d'amas permet d'obtenir, par compression entre les corps mobiles, des particules dont la granulométrie au cours du temps devient homogène et se situe entre 10 µm et 150 µm. La densité de la poudre augmente de manière continue avec le temps de traitement à l'intérieur de la cuve renfermant les corps mobiles jusqu'à atteindre, en une durée de l'ordre d'une à deux heures, une valeur de l'ordre de 2 g/cm³. La coulabilité de la poudre de conversion voie sèche est nulle, comme indiqué plus haut, et, après quelques minutes de traitement dans la cuve renfermant les corps mobiles qui est soumise aux vibrations, la coulabilité des particules devient supérieure à 10 g/sec et peut atteindre très rapidement des valeurs très supérieures jusqu'à 60 g/sec et plus (valeurs mesurées avec le dispositif mentionné ci dessus).

La matière particulaire obtenue après une à deux heures de traitement et, dans certains cas, jusqu'à 150 minutes, dans la cuve renfermant les corps mobiles peut être utilisée pour la fabrication de pastilles crues par compression, du fait de sa densité, de sa coulabilité et de sa compressibilité due entre autres à la forme des particules obtenues et à leur granulométrie.

En outre, le traitement à l'intérieur de la cuve en vibration contenant les corps mobiles permet de réaliser en même temps un mélange intime des poudres d'oxyde d'uranium obtenues par le procédé de conversion voie sèche et d'additifs tels que P_{U}O₂, ThO₂, Gd₂O₃ et Er₂O₃ ou encore des agents porogènes tels que des matières organiques ou minérales susceptibles d'être détruites pendant le frittage ou des lubrifiants tels que le stéarate de zinc ou d'aluminium ou l'éthylène bistéaramide ou d'agents dopants destinés à modifier la structure cristalline des pastilles frittées. On peut réaliser l'incorporation au mélange, à l'intérieur de la cuve, de tout autre additif tel que mentionné plus haut permettant de modifier la structure et la composition des pastilles.

On peut également ajouter au mélange des lubrifiants ayant également un effet porogène et destinés à remplacer les agents porogènes classiques tels que le produit connu sous l'appellation AZB ou l'oxalate d'ammonium ou ses dérivés.

L'incorporation des additifs à la poudre d'oxyde (comportant généralement UO₂ et U₃O₈) peut être effectuée totalement ou partiellement au moment du chargement de la cuve avant le démarrage du traitement ou en cours de traitement à un instant bien déterminé.

Le ou les lubrifiants sont ajoutés et mélangés aux grains déjà formés et non dans la poudre de départ, pour obtenir un effet lubrifiant lors de l'étape ultérieure de compactage.

Le procédé suivant l'invention permet de réaliser la fabrication de combustible contenant principalement de l'oxyde d'uranium UO₂ et d'autres matériaux, par exemple des produits neutrophages comme l'oxyde de gadolinium ou d'erbium ou des matériaux combustibles fissiles tels que l'oxyde de plutonium ou encore des produits fertiles tels que l'oxyde de thorium. Ces produits sont ajoutés dans la cuve, au moment voulu pour réaliser une bonne intégration de ces matériaux aux particules formées à partir des oxydes d'uranium de la poudre obtenue par conversion de l'UF₆.

Dans le cas de matériaux toxiques et/ou radioactifs, tels que l'oxyde de plutonium, il est bien sûr nécessaire de prendre les précautions connues de l'homme de l'art. Toutefois, la mise en oeuvre du procédé suivant l'invention qui permet d'obtenir la matière particulaire pour la fabrication des pastilles crues, en une seule opération à l'intérieur d'une seule cuve renfermant des corps mobiles de compression permet de réaliser facilement ces opérations sans risque pour les opérateurs, en plaçant la cuve à l'intérieur d'une enceinte protectrice telle qu'une boîte à gants, les opérations de constitution de la charge, d'addition et de mise en vibration de la cuve pouvant être commandées depuis l'extérieur de la boîte à gants.

Dans le cas d'un mode de réalisation préférentiel, les corps mobiles de compression et de mélange sont totalement libres à l'intérieur de la cuve et constituent une partie de la charge introduite dans la cuve. Dans ce cas, on introduit tout d'abord dans la cuve les corps de compression, par exemple des billes ou des cylindres, dans une quantité prédéterminée. On introduit ensuite la poudre provenant directement du procédé de conversion d'UF₆ et éventuellement différents additifs. On met ensuite la cuve en mouvement et de préférence en mouvement de vibrations. Les corps mobiles restent en permanence dans la cuve, le produit traité est évacué au travers d'une grille situé à la base de la cuve

Selon un mode de réalisation préférentiel, les corps mobiles à l'intérieur de la cuve sont en alumine Al₂O₃ de grande dureté. Lors de la mise en oeuvre du procédé de l'invention, l'énergie cinétique communiquée aux corps mobiles assurant la compression de la poudre est modérée, de sorte que l'énergie mise en oeuvre lors du choc des corps mobiles entre eux et sur les parois de la cuve est réduite. Les corps mobiles de compression et de mélange subissent donc des destructions très limitées et, de ce fait, la contamination des poudres par des matériaux provenant des corps mobiles de compression est faible. En outre, l'introduction de faibles quantités d'alumine dans les pastilles de combustible ne présente pas d'inconvénient, l'aluminium pouvant même apporter des effets bénéfiques. Les mesures réalisées indiquent en outre que cette contamination par l'aluminium n'excède pas quelques parties par million

Lorsqu'on utilise des corps mobiles en oxyde d'uranium UO₂ fritté à la place d'alumine, on supprime totalement le risque de contamination par des éléments qui ne se trouveraient pas dans la poudre d'oxyde d'uranium. En outre, on réduit le temps de traitement en augmentant l'énergie cinétique due à la densité élevée des corps en oxyde d'uranium fritté (densité théorique 10,96 g/cm³). Toutefois, l'introduction d'uranium sous forme d'oxyde d'uranium fritté dans la poudre, du fait d'une certaine détérioration des corps mobiles, réduit sensiblement la frittabilité du mélange, et n'apporte pas d'autres avantages substantiels, .

Afin de bien faire comprendre l'invention, on va décrire quelques exemples de réalisation.

Trois exemples de mise en oeuvre de l'invention seront décrits ci-après comme exemples n°s 1, 2 et 3 ainsi qu'un exemple comparatif.

L'étape caractéristique du procédé de l'invention consistant à traiter des poudres obtenues directement par un procédé de conversion voie sèche dans une cuve renfermant des corps mobiles, pour obtenir une matière particulaire pouvant être utilisée pour la fabrication de pastilles crues est mise en oeuvre dans un broyeur vibrant commercialisé sous la référence DM1 par la société SWECO.

Dans le cas des quatre exemples de réalisation, la cuve du broyeur de forme toroïdale à axe vertical renferme 20 kg de corps mobiles constitués par des cylindres d'alumine frittée de 1/2" (12,7 mm) environ de diamètre et de longueur. Pour la mise en oeuvre du traitement, la poudre est déversée sur les corps mobiles de compression totalement libres à l'intérieur de la cuve. On met ensuite la cuve en mouvement de vibration par alimentation du moteur à balourd fixé à la cuve.

### Exemple 1

On élabore successivement plusieurs charges de matière particulaire, à partir d'oxyde d'uranium UO₂ provenant d'un procédé de conversion voie sèche d'hexafluorure UF₆. Pour la réalisation de huit charges d'une première série, on introduit dans la cuve du broyeur contenant les corps mobiles en alumine, 10 kg de matériau sous forme de poudre comportant, en poids, 89 % d'oxyde d'uranium UO₂, 6 % d'UROX et 5 % d'U₃O₈ auquel on ajoute 0,2 % d'éthylène bistéaramide et 0,55 % d'oxalate d'ammonium.

Pour la réalisation de huit charges d'une seconde série, on introduit successivement dans la cuve des charges d'un matériau ayant la même composition que les huit charges de la première série auquel on ajoute 0,2 % d'éthylène bistéaramide et 0,47 % d'oxalate d'ammonium.

Le produit connu sous l'appellation UROX est un oxyde d'uranium U₃O₈ obtenu soit à partir de l'oxyfluorure d'uranium UO₂F₂, pendant la conversion de l'UF₆ pour obtenir des oxydes d'uranium, soit à partir de l'oxyde UO₂ dans un four à haute température.

L'oxyde U₃O₈ ajouté dans le mélange avec l'UROX est récupéré, dans des pastilles de combustible, en cours de fabrication ou à l'issue de la fabrication des pastilles.

Chacune des charges de la première série de charges et chacune des charges de la seconde série est soumise à une agitation dans la cuve, de manière que la charge et les corps mobiles se déplacent dans toutes les directions de l'espace.

Après une durée de traitement de l'ordre de 120 minutes, on récupère dans la cuve une matière granulaire constituée principalement d'oxydes d'uranium dont les caractéristiques sont les suivantes :
Densité moyenne à l'état non tassé (DNT) : environ 2,2g/cm³.
Densité moyenne à l'état tasé (DT) : environ 2,9 g/cm³.
Coulabilité moyenne : environ 57 g/s.

Les particules de chacune des séries de huit charges sont homogénéisées dans un mélangeur, de manière à présenter des propriétés uniformes (en particulier des densités et coulabilité centrées sur les valeurs indiquées ci-dessus).

Pour l'homogénéisation des charges de chacune des deux séries de charges, on introduit les huit charges de particules dans un mélangeur à cuve tournante utilisé de manière habituelle dans les usines de fabrication de pastilles de combustible nucléaire et on met la cuve en rotation.

De préférence, la cuve du mélangeur présente une forme biconique. Une telle cuve généralement appelée bicône est utilisée habituellement dans les usines de fabrication de combustible nucléaire.

On utilise un bicône d'une capacité d'au moins 80 kg dans lequel on introduit les huit charges de chacune des séries de charges, puis on met le bicône en rotation pendant cinq minutes environ, pour obtenir une matière particulaire homogène ayant les caractéristiques moyennes indiquées plus haut.

Il est bien évident que, lorsqu'on dispose, dans la mise en oeuvre industrielle de l'invention, d'une cuve d'agitation en présence de corps mobiles, d'une capacité suffisante (par exemple 80 kg), on peut réaliser l'agitation du mélange de poudres de départ, en une seule opération pour obtenir une masse de matière particulaire homogène sans traitement d'homogénéisation ultérieur au bicône.

Toutefois le bicône est utilisé, soit après l'homogénéisation des charges, soit à l'issue de l'agitation des poudres dans une cuve de grande capacité, pour assurer le mélange d'un lubrifiant avec la matière particulaire.

Dans le cas où le bicône est utilisé pour l'homogénéisation de charges, on ajoute le lubrifiant à la charge homogénéisée dans le bicône et dans le cas où l'on obtient toute la masse de matière particulaire en une seule opération, on transvase la matière particulaire dans un bicône et on ajoute le lubrifiant.

On ajoute par exemple à la matière particulaire 0,25 % en poids d'éthylène bistéaramide. On réalise un mélange du lubrifiant à la matière particulaire, en faisant tourner la cuve du bicône pendant 1 mn 30 s environ.

L'éthylène bistéaramide choisi comme lubrifiant est de préférence utilisé sous la forme du produit commercial CIREC de la Société HOECHST qui présente la granulométrie voulue pour assurer la lubrification de manière optimale.

Toutefois, l'agitation en présence de corps mobiles produisant une interaction et un mélange "dur" des substances en présence a tendance à amoindrir ou à détruire l'effet lubrifiant de la substance ajoutée à titre de lubrifiant.

Il peut donc être nécessaire, pour obtenir de bonnes conditions de lubrification de réaliser un mélange "doux" des particules et du lubrifiant dans un dispositif mélangeur tel qu'un bicône.

Une lubrification insuffisante se traduit par des forces de compression accrues et des grincements dus au frottement des particules pendant la compression.

On obtient une matière particulaire homogénéisée et lubrifiée d'une DNT de 2,4 g/cm³ environ et d'une DT de 2,9 g/cm³ environ. La coulabilité de la matière particulaire est d'environ 80 g/s.

Les deux charges de matière particulaire obtenues à partir de mélanges qui ne diffèrent que par la proportion de matériau porogène (oxalate d'ammonium) dans le mélange de départ ont des propriétés identiques et sont introduites successivement dans une presse de pastillage pour réaliser la compression de la matière particulaire, afin d'obtenir des pastilles crues.

Les pastilles crues présentent des propriétés de résistance satisfaisante.

Les pastilles crues obtenues à partir de la première charge (contenant 0,55 % de porogène) ont une densité de 6,3 g/cm³ et les pastilles crues à partir de la seconde charge (contenant 0,47 % de porogène), une densité de 5,8 g/cm³.

L'ajout de porogène permet d'atteindre la densité frittée recherchée (95%).

Le lubrifiant était, dans les deux cas, correctement dispersé dans la matière particulaire. Aucun grincement n'a été observé lors de la compression.

L'étape d'agitation du mélange de poudres en présence de corps mobiles a permis d'obtenir une matière particulaire dont la densité à l'état non tassé et à l'état tassé est très sensiblement supérieure à la densité de la poudre de départ constituée principalement d'oxyde d'uranium UO₂ provenant d'un procédé de conversion voie sèche d'hexafluorure d'uranium UF₆.

L'étape de mélange avec un lubrifiant a permis d'augmenter très légèrement la densité (au moins à l'état non tassé) et d'accroître sensiblement la coulabilité de la matière particulaire.

### Exemple 2

On introduit dans la cuve contenant les corps mobiles en alumine 5 kg de poudre de dioxyde d'uranium UO₂ obtenu par voie sèche dont la densité est de 0,9 g/cm³, cette poudre obtenue directement par le procédé de conversion d'UF₆ n'étant pas coulable à travers un orifice de 15 mm. On n'introduit dans la charge de poudre d'UO₂ ni produit porogène ni lubrifiant et on démarre le traitement en mettant en mouvement de vibrations la cuve contenant la charge.

On prélève du matériau particulaire en cours de traitement après, respectivement, 10, 15, 30, 60 et 120 minutes, le traitement prenant fin après 120 minutes.

On a mesuré les densités et la coulabilité de la matière particulaire, comme précédemment par tamisage, et les résultats sont reportés au tableau 2 ci-dessous.

**TABLEAU 2**

| ESSAIS | Mode de remplissage : 20 kg de média broyant (11x13 mm) en alumine | | | | | | | | |
|---|---|---|---|---|---|---|---|---|---|
| N°2 | Temps de traitement | min | 0 | 10 | 15 | 30 | 60 | 120 | |
| Densité | DNT | g/cm³ | 0.9 | 1.3 | 1.3 | 1.5 | 1.8 | 2.1 | |
| | DT | g/cm³ | 1.6 | 1.9 | 1.9 | 2.1 | 2.4 | 2.6 | |
| Coulabilité | Cône 15 mm | g/s | 0 | 0 | 42 | 58 | 66 | 79 | |

La densité à l'état non tassé passe de la valeur 0,9 g/cm³ à la valeur 2,1 g/cm³ au cours des deux heures de traitement. La coulabilité augmente brusquement après 15 minutes de traitement pour atteindre une valeur de 79 g/s à la fin du traitement.

Comme précédemment, on réalise une compression de la matière particulaire obtenue à l'issue du traitement dans des matrices permettant d'obtenir des pastilles crues. Pour réaliser cette opération, on mélange avec les particules un lubrifiant permettant de faciliter la compression des particules sous la forme de pastilles crues. (Avant de réaliser la compression, on ajoute éventuellement un porogène à la matière particulaire pour régler la densité des pastilles frittées à une valeur voulue).

### Exemple n° 3

**TABLEAU 3**

| ESSAIS | Mode de remplissage : 20 kg de média broyant (11x13 mm) en alumine | | | | | | | | |
|---|---|---|---|---|---|---|---|---|---|
| N°3 | Temps de traitement | min | 0 | | | | 60 | | |
| Densité | DNT | g/cm³ | 1.1 | | | | 2.1 | | |
| | DT | g/cm³ | 1.8 | | | | 2.6 | | |
| Coulabilité | Cône 15 mm | g/s | 0 | | | | 65 | | |

On charge dans la cuve renfermant les corps de compression sous forme de cylindres 4 kg d'une poudre de dioxyde d'uranium UO₂ obtenue par voie sèche, de densité 0,8 g/cm³, cette poudre n'étant pas coulable à travers un orifice de 15 mm, puis 2 kg d'un mélange d'oxydes d'uranium renfermant 25 % d'oxyde de gadolinium (Gd₂O₃) ainsi que 36 g de produit porogène constitué par une substance organique. On arrête le traitement après une heure, la poudre constituée par le mélange d'uranium et d'oxyde de gadolinium qui avait une densité de 1,1 g/cm³ au moment du démarrage du traitement présente, après une heure de traitement, une densité de 2,1 g/cm³. Cette poudre présente une bonne coulabilité de 65 g/s.

On ajoute à la poudre 18 g d'un lubrifiant constitué de stéarate de zinc. La matière particulaire mélangée au lubrifiant est ensuite directement compactée et mise sous forme de pastilles crues qui sont ensuite frittées par le procédé habituel.

### Exemple comparatif

On introduit une poudre d'oxyde d'uranium UO₂ obtenue directement par le procédé de conversion voie sèche dont la densité à l'état non tassé est de 0,85 g/cm³ dans un broyeur à couteaux tel qu'utilisé pour le traitement des poudres dans l'atelier de conversion, selon le procédé de l'art antérieur.

A l'issue du traitement dans le broyeur à couteaux, la densité de la poudre n'a pas changé ou a même légèrement diminué pour atteindre une valeur de 0,8 g/cm³. La coulabilité de la poudre qui était nulle au départ reste nulle à l'issue du traitement dans le broyeur à couteaux.

Les exemples selon l'invention montrent donc que le procédé suivant l'invention mettant en oeuvre une cuve d'agitation renfermant des corps mobiles et de préférence des corps mobiles libres permet d'augmenter sensiblement la densité d'une poudre obtenue par un procédé de conversion voie sèche, pour atteindre une valeur proche de ou légèrement supérieure à 2 g/cm³. En outre, le traitement permet d'obtenir une matière particulaire ayant une très bonne coulabilité qui peut être facilement mise sous forme de pastilles crues, par les procédés habituels.

Les pastilles crues frittées ont des propriétés qui sont celles des pastilles combustibles fabriquées par les procédés suivant l'art antérieur.

En outre, les essais effectués montrent qu'on peut adjoindre des additifs aux poudres d'oxyde d'uranium obtenues par le procédé voie sèche, soit avant le démarrage du traitement dans la cuve, soit en cours de traitement, soit à l'issue du traitement dans la cuve. Il est généralement nécessaire, lorsqu'on utilise des porogènes organiques d'introduire plus de 0,1 % en poids de porogène dans la cuve de traitement avec l'oxyde d'uranium et dans tous les cas plus de 0,01 %. Chaque additif ou autre produit ayant son propre effet porogène, connaissant la densité finale à obtenir et la densité frittée de la matrice sans additifs, on calcule la quantité d'additifs et de porogène à ajouter pour obtenir la densité frittée visée. Le procédé suivant l'invention qui ne comporte qu'une seule étape (ou au plus deux étapes si l'on prend en compte une étape de lubrification par mélange "doux") pour passer de la poudre d'oxyde d'uranium obtenue par un procédé de conversion d'hexafluorure d'uranium à une matière particulaire qui peut être mise sous forme de pastilles crues, au lieu de sept étapes dans le cas du procédé antérieur, permet une simplification considérable des procédures et des matériels utilisés pour la fabrication du combustible nucléaire.

Le mélange d'un lubrifiant et de la matière particulaire peut être réalisé dans d'autres dispositifs qu'un mélangeur de type bicône ; de tels dispositifs doivent assurer un mélange "doux" de manière à ne pas détruire le lub rifiant.

L'invention s'applique à la fabrication de pastilles de combustible de compositions extrêmement variées.

Dans le cas de la fabrication de pastilles pour combustible MOX, renfermant des oxydes d'uranium (principalement UO₂) et de plutonium PuO₂, l'oxyde de plutonium peut être ajouté au mélange avant traitement d'agitation en présence de corps mobiles ou à la matière particulaire obtenue par le traitement 'agitation dans la cuve du broyeur. L'oxyde de plutonium sous forme de poudre peut être mélangé à la matière particulaire dans un mélangeur de poudres.

On peut utiliser un ou plusieurs lubrifiants choisis parmi un grand nombre de substances qui peuvent être ajoutés à la matière particulaire avant la mise en forme des pastilles crues. En particulier, ces lubrifiants peuvent être par exemple de l'éthylène bistéaramide ou de l'ADS (aluminium distéarate).

## Revendications

1. Procédé de fabrication de pastilles de combustible nucléaire par frittage d'une matière contenant du dioxyde d'uranium UO₂ obtenue à partir d'une poudre issue d'un procédé de conversion d'hexafluorure d'uranium UF₆, **caractérisé par le fait qu'**on introduit, dans une cuve renfermant des corps mobiles de compression et de mélange, la poudre obtenue directement par un procédé de conversion d'hexafluorure UF₆ et qu'on réalise une agitation de la cuve de telle sorte que la poudre se déplace dans le volume de la cuve suivant trois axes non coplanaires, de manière à être comprimée entre les corps mobiles et entre les corps mobiles et les parois de la cuve jusqu'à former une matière particulaire d'une densité à l'état non tassé d'au moins 1,7 g/cm³, et qu'on utilise la matière particulaire obtenue par agitation dans la cuve pour la mise en forme de pastilles de combustible crues qui sont soumises au frittage.

2. Procédé suivant la revendication 1, **caractérisé par le fait qu'**on soumet la cuve à un mouvement vibratoire tridimensionnel.

3. Procédé suivant l'une quelconque des revendications 1 et 2, **caractérisé par le fait que** la poudre introduite dans la cuve est obtenue par un procédé de conversion voie sèche et présente une densité inférieure à 1 g/cm³ et que la densité à l'état non tassé de la matière particulaire obtenue par agitation dans la cuve est d'environ 2 g/cm³.

4. Procédé suivant l'une quelconque des revend ications 1 à 3, **caractérisé par le fait que** la poudre obtenue directement par un procédé de conversion d'hexafluorure UF₆ présente une densité inférieure à 1 g/cm³ et une coulabilité nulle définie par un essai standard de passage à travers un orifice de 15 mm, et que la matière particulaire obtenue par agitation dans la cuve présente une coulabilité supérieure à 10 g/s après quelques minutes d'agitation dans la cuve.

5. Procédé suivant l'une quelconque des revendications 1 à 4, **caractérisé par le fait qu'**on réalise l'agitation de la cuve contenant les corps mobiles et la poudre obtenue directement par un procédé de conversion d'hexafluorure UF₆, pendant une durée de 1 à 600 minutes.

6. Procédé suivant l'une quelconque des revendications 1 à 5, **caractérisé par le fait que** les corps mobiles de compression et de mélange dans la cuve sont des corps libres ayant une forme géométrique quelconque simple et une surface de rugosité faible.

7. Procédé suivant la revendication 6, **caractérisé par le fait que** les corps mobiles sont de forme cylindrique.

8. Procédé suivant la revendication 6, **caractérisé par le fait que** les corps mobiles ont la forme de billes sensiblement sphériques.

9. Procédé suivant l'une quelconque des revendications 1 à 8, **caractérisé par le fait que** les corps mobiles sont en l'un des matériaux suivants : alumine Al₂O₃ frittée, oxyde d'uranium fritté, oxyde de zirconium fritté pur ou dopé, carbure de Tungstène, aciers, Uranium métal ou alliage Uranium/Titane.

10. Procédé suivant l'une quelconque des revendications 1 à 9, **caractérisé par le fait qu'**on introduit dans la cuve, avant de réaliser l'agitation de la cuve, avec la poudre de dioxyde d'Uranium UO₂ obtenue directement par un procédé de conversion d'hexafluorure UF₆, au moins un additif constitué par au moins un porogène dans une proportion au moins égale à 0,01 %.

11. Procédé suivant l'une quelconque des revendications 1 à 10, **caractérisé par le fait qu'**on introduit dans la cuve, avec la poudre de dioxyde d'uranium UO₂ obtenue directement par un procédé de conversion d'hexafluorure UF₆, au moins un additif.

12. Procédé suivant la revendication 11, **caractérisé par le fait que** l'additif est introduit dans la cuve avant de réaliser le traitement par agitation de la cuve.

13. Procédé suivant la revendication 12, **caractérisé par le fait que** l'additif est introduit dans la cuve au cours du traitement par agitation de la cuve.

14. Procédé suivant l'une quelconque des revendications 11 à 13, **caractérisé par le fait que** l'additif est constitué par l'une au moins des substances suivantes : oxyde d'uranium U₃O₈, oxyde d'uranium U₃O₇, oxyde de plutonium P_{U}O₂, oxyde de thorium ThO₂, oxyde de gadolinium Gd₂O₃, plutonium P_{U}O₂, oxyde de thorium ThO₂, oxyde de gadolinium Gd₂O₃, substance porogène, lubrifiant, agents dopants du frittage.

15. Procédé suivant l'une quelconque des revendications 1 à 14, pour la fabrication de pastilles de combustible mixte oxyde d'uranium - oxyde de plutonium (MOX), **caractérisé par le fait que** la cuve est placée dans une enceinte de confinement telle qu'une boîte à gant et qu'on réalise l'introduction de poudres d'oxyde d'uranium, d'oxyde de Plutonium et d'additifs, dans la cuve et l'agitation de la cuve, de manière commandée depuis l'extérieur de l'enceinte de confinement.

16. Procédé suivant l'une quelconque des revendications 1 à 15, **caractérisé par le fait que**, préalablement à la mise en forme des pastilles crues par compression de la matière particulaire obtenue par agitation dans la cuve, on ajoute une matière lubrifiante à la matière particulaire et on réalise un mélange doux de la matière particulaire et de la matière lubrifiante pour répartir la matière lubrifiante sur les particules de la matière particulaire.

17. Procédé suivant l'une quelconque des revendications 1 à 16, **caractérisé par le fait qu'**on mélange la matière particulaire renfermant principalement de l'oxyde d'Uranium UO₂ obtenue par agitation de la poudre de conversion, en présence de corps mobiles, avec de la poudre d'oxyde de plutonium PuO₂, avant la mise en forme des pastilles crues, pour la fabrication de combustible MOX.

## Claims

1. A process for the manufacture of nuclear fuel pellets through the sintering of a material containing uranium dioxide UO₂ obtained from a powder originating from a process for the conversion of uranium hexafluoride UF₆, **characterised in that** the powder obtained directly by a UF₆ hexafluoride conversion process is placed in a vessel containing moving compression and mixing bodies and **in that** the vessel is agitated in such a way that the powder moves within the volume of the vessel in three non-coplanar axes in such a way as to be compressed between the moving bodies and between the moving bodies and the walls of the vessel to form a particulate material having a density in the uncompacted state of at least 1.7 g/cm³, and that the particulate material obtained by agitation in the vessel is used to shape raw fuel pellets which undergo sintering.

2. A process according to claim 1, **characterised in that** the vessel is subjected to three-dimensional vibratory movement.

3. A process according to either of claims 1 and 2, **characterised in that** the powder placed in the vessel is obtained by a dry route conversion process and has a density of less than 1 g/cm³ and that the density of the particulate material obtained by agitation in the vessel is approximately 2 g/cm³ in the uncompacted state.

4. A process according to any one of claims 1 to 3, **characterised in that** the powder obtained directly by a UF₆ hexafluoride conversion process has a density of less than 1 g/cm³ and a flowability of zero as defined by a standard test of passage through a 15 mm orifice, and **in that** the particulate material obtained by agitation in the vessel has a flowability of more than 10 g/s after a few minutes agitation in the vessel.

5. A process according to any one of claims 1 to 4, **characterised in that** the vessel containing the moving bodies and the powder obtained by a UF₆ hexafluoride conversion process is agitated for a time of between 1 and 600 minutes.

6. A process according to any one of claims 1 to 5, **characterised in that** the moving compression and mixing bodies in the vessel are free bodies having any simple geometrical shape and a surface of low roughness.

7. A process according to claim 6, **characterised in that** the moving bodies are of cylindrical shape.

8. A process according to claim 6, **characterised in that** the moving bodies have the shape of substantially spherical beads.

9. A process according to any one of claims 1 to 8, **characterised in that** the moving bodies are of one of the following materials: sintered alumina Al₂O₃, sintered uranium oxide, pure or doped sintered zirconium oxide, tungsten carbide, steels, uranium metal or uranium/titanium alloy.

10. A process according to any one of claims 1 to 9, **characterised in that** before the vessel is agitated at least one additive comprising at least one pore-forming agent in a proportion equal to at least 0.01% is added to the vessel together with the uranium dioxide UO₂ powder obtained directly by a UF₆ hexafluoride conversion process.

11. A process according to any one of claims 1 to 10, **characterised in that** at least one additive is added to the vessel together with the uranium dioxide UO₂ powder obtained directly by a UF₆ hexafluoride conversion process.

12. A process according to claim 11, **characterised in that** the additive is placed in the vessel before carrying out the treatment through agitation of the vessel.

13. A process according to claim 12, **characterised in that** the additive is placed in the vessel in the course of the treatment by agitation of the vessel.

14. A process according to any one of claims 11 to 13, **characterised in that** the additive comprises at least one of the following substances: uranium oxide U₃O₈, uranium oxide U₃O₇, plutonium oxide PuO₂, thorium oxide ThO₂, gadolinium oxide Gd₂O₃, pore-forming substance, lubricant, sintering doping agents.

15. A process according to any one of claims 1 to 14, for the production of mixed uranium oxide - plutonium oxide (MOX) fuel pellets, **characterised in that** the vessel is placed in a confinement enclosure such as a glove box and that the uranium oxide, plutonium oxide powders and additives are placed in the vessel and that the vessel is agitated in a manner which is controlled from outside the containment enclosure.

16. A process according to any one of claims 1 to 15, **characterised in that** prior to shaping of the raw pellets by compression of the particulate material obtained by agitation in the vessel, a lubricant material is added to the particulate material and a soft mixture of the particulate material and the lubricating material is prepared in order to distribute the lubricating material over the particles of the particulate material.

17. A process according to any one of claims 1 to 16, **characterised in that** the particulate material comprising mainly uranium oxide UO₂ obtained by agitation of the conversion powder in the presence of moving bodies is mixed with the plutonium oxide powder PuO₂ before shaping of the raw pellets for the production of MOX fuel.

## Patentansprüche

1. Verfahren zur Herstellung von Kernbrennstoffpellets durch Sintern einer Substanz, welche Urandioxid UO₂ enthält, welches ausgehend von einem Pulver erhalten wird, das aus einem Konversionsverfahren von Uranhexafluorid UF₆ hervorgegangen ist, **dadurch gekennzeichnet, dass** man das Pulver, welches direkt aus einem Konversionsverfahren von Hexafluorid UF₆ erhalten wird, in einen Behälter, welcher mobile Druck- und Mischkörper einschließt, einführt und eine Bewegung des Behälters derart durchführt, dass sich das Pulver in dem Volumen des Behälters gemäß drei nicht koplanaren Achsen verlagert, so dass es zwischen den mobilen Körpern und zwischen den mobilen Körpern und den Wänden des Behälters komprimiert wird, bis eine partikuläre Substanz mit einer Dichte im ungepressten Zustand von wenigstens 1,7 g/cm³ gebildet wird, und dass man die partikuläre Substanz, die durch Bewegung in dem Behälter erhalten wird, zur Formung von rohen Brennstoffpellets, die Sintern unterzogen werden, verwendet.

2. Verfahren gemäß Anspruch 1, **dadurch gekennzeichnet, dass** man den Behälter einer dreidimensionalen Vibrationsbewegung unterzieht.

3. Verfahren gemäß irgendeinem der Ansprüche 1 und 2, **dadurch gekennzeichnet, dass** das in den Behälter eingeführte Pulver durch ein Trockenkonversionsverfahren erhalten wird und eine Dichte unter 1 g/cm³ aufweist, und dass die Dichte im ungepressten Zustand der partikulären Substanz, die durch Bewegung in dem Behälter erhalten wird, ungefähr 2 g/cm³ beträgt.

4. Verfahren gemäß irgendeinem der Ansprüche 1 bis 3, **dadurch gekennzeichnet, dass** das Pulver, welches direkt durch ein Konversionsverfahren von Hexafluorid UF₆ erhalten wird, eine Dichte unter 1 g/cm³ und eine Vergießbarkeit von Null, die durch einen Standard-Essay des Durchgangs durch eine Öffnung von 15 mm definiert wird, aufweist, und dass die partikuläre Substanz, die durch Bewegung in dem Behälter erhalten wird, nach einigen Minuten Bewegung in dem Behälter eine Vergießbarkeit von über 10 g/s aufweist.

5. Verfahren gemäß irgendeinem der Ansprüche 1 bis 4, **dadurch gekennzeichnet, dass** die Bewegung des Behälters, welcher die mobilen Körper und das Pulver, welches direkt durch ein Konversionsverfahren von Hexafluorid UF₆ erhalten wird, enthält, über einen Zeitraum von 1 bis 600 Minuten durchgeführt wird.

6. Verfahren gemäß irgendeinem der Ansprüche 1 bis 5, **dadurch gekennzeichnet, dass** die mobilen Druck- und Mischkörper in dem Behälter freie Körper sind, welche irgendeine einfache geometrische Form und eine leicht raue Oberfläche aufweisen.

7. Verfahren gemäß Anspruch 6, **dadurch gekennzeichnet, dass** die mobilen Körper zylindrische Form aufweisen.

8. Verfahren gemäß Anspruch 6, **dadurch gekennzeichnet, dass** die mobilen Körper die Form von etwa sphärischen Kugeln aufweisen.

9. Verfahren gemäß irgendeinem der Ansprüche 1 bis 8, **dadurch gekennzeichnet, dass** die mobilen Körper aus einem der folgenden Materialien bestehen: gesintertes Aluminiumoxid Al₂O₃, gesintertes Uranoxid, gesintertes, reines oder dotiertes Zirkoniumoxid, Wolframkarbid, Stähle, Uranmetall oder Uran-Titan-Legierung.

10. Verfahren gemäß irgendeinem der Ansprüche 1 bis 9, **dadurch gekennzeichnet, dass** man, vor Durchführung der Bewegung in dem Behälter, mit dem Urandioxidpulver UO₂, welches direkt durch ein Konversionsverfahren von Hexafluorid UF₆ erhalten wird, wenigstens ein Additiv, welches aus wenigstens einem Porenbildner besteht, in einem Verhältnis von wenigstens 0,01 % in den Behälter einführt.

11. Verfahren gemäß irgendeinem der Ansprüche 1 bis 10, **dadurch gekennzeichnet, dass** man mit dem Urandioxidpulver UO₂, welches direkt durch ein Konversionsverfahren von Hexafluorid UF₆ erhalten wird, wenigstens ein Additiv in den Behälter einführt.

12. Verfahren gemäß Anspruch 11, **dadurch gekennzeichnet, dass** das Additiv in den Behälter eingeführt wird, bevor die Behandlung durch Bewegung des Behälters durchgeführt wird.

13. Verfahren gemäß Anspruch 12, **dadurch gekennzeichnet, dass** das Additiv im Verlauf der Behandlung durch Bewegung des Behälters in den Behälter eingeführt wird.

14. Verfahren gemäß irgendeinem der Ansprüche 11 bis 13, **dadurch gekennzeichnet, dass** das Additiv durch wenigstens eine der folgenden Substanzen gebildet wird: Uranoxid U₃O₈, Uranoxid U₃O₇, Plutoniumoxid PuO₂, Thoriumoxid ThO₂, Gadoliniumoxid Gd₂O₃, Porenbildner, Schmiermittel, Sinter-Dotiermittel.

15. Verfahren gemäß irgendeinem der Ansprüche 1 bis 14 zur Herstellung von Brennstoffpellets aus gemischtem Uranoxid-Plutoniumoxid (MOX), **dadurch gekennzeichnet, dass** der Behälter in einem Schutzbehälter, wie beispielsweise einem Strahlenschutzkasten, platziert wird, und dass das Einführen der Uranoxid-, Plutoniumoxid- und Additivpulver in den Behälter und die Bewegung des Behälters von außerhalb des Schutzbehälters gesteuert wird.

16. Verfahren gemäß irgendeinem der Ansprüche 1 bis 15, **dadurch gekennzeichnet, dass** vor der Formung der rohen Pellets durch Kompression der partikulären Substanz, die durch Bewegung in dem Behälter erhalten wird, der partikulären Substanz eine Schmiermittel-Substanz zugegeben wird und ein behutsames Mischen der partikulären Substanz und der Schmiermittel-Substanz durchgeführt wird, um die Schmiermittel-Substanz auf den Partikeln der partikulären Substanz zu verteilen.

17. Verfahren gemäß irgendeinem der Ansprüche 1 bis 16, **dadurch gekennzeichnet, dass** die partikuläre Substanz, welche im Wesentlichen Uranoxid UO₂ einschließt, welche durch Bewegung des Konversionspulvers in Gegenwart von mobilen Körpern erhalten wird, vor der Formung der rohen Pellets mit dem Plutoniumoxidpulver PuO₂ gemischt wird, um MOX-Brennstoff herzustellen.
